# EUROPEAN PATENT SPECIFICATION

(11) **EP 0 563 162 B1**
(45) Date of publication and mention of the grant of the patent: **12.03.1997**
(21) Application number: 92901550.1
(22) Date of filing: 20.12.1991
(51) Int. Cl.: A63G 21/18, B65G 51/00

(54) **SWIMMING POOL SYSTEM FOR RECREATIVE PURPOSES**
SCHWIMMBECKENSYSTEM FÜR REKREATIONSZWECKE
SYSTEME DE PISCINE DE LOISIRS

(30) Priority: 20.12.1990 NL 9002824; 30.01.1991 NL 9100156
(43) Date of publication of application: 06.10.1993
(73) Proprietor: KNOL, Willem, NL-7522 PJ Enschede (NL)
(72) Inventor: KNOL, Willem, NL-7522 PJ Enschede (NL)
(74) Representative: Van kan, Johan Joseph Hubert, Ir.
(86) International application number: NL9100268
(87) International publication number: WO9211072

(56) References cited:
- DE-A- 2 200 789
- US-A- 2 778 692
- US-A- 4 046 996
- US-A- 4 805 897

## Description

The invention relates to a swimming pool for recreative purposes comprising
a water guide comprising substantially closed lateral walls, extending at least partially above the level of the water surface of this swimming pool and in which a person can move.

Such a system is known, for instance from the American patent specification US-A-4 805 897.

The known recreative swimming pool system comprises a water slide from an elevated platform to a pool. Water is carried by means of a pump system to the start of the water slide on the platform so that a person can allow himself to be carried in and by the water over the water slide to the pool located thereunder. The known system does not offer a person the option of being propelled forward in the water guide in upward direction.

The object of the invention is to provide a swimming pool system for recreative purposes which offers a person the option of allowing himself to be moved in a water guide in upward direction.

This object is achieved according to the invention with a swimming pool system characterized by means for transporting water in the water guide in upward direction in such amounts, that the person is allowed to be moved in upward direction.

In a system with a water guide according to the invention it is possible for a person to move himself in upward direction in the water guide either by actively swimming upward in upwardly pushed water of by allowing himself to be carried along passively by water being pushed in upward direction in the water guide.

In a first embodiment of a system acoording to the invention the water guide comprise a holder rising from the surface of the water and closed at the top and open at the bottom, and the means for transporting water comprises a pumping device connected to the top side of the holder.

When the air pressure in such a holder is decreased using the pumping device, the water level therein rises relative to the water surface outside the holder. When the holder is sufficiently high and the water therein is pumped to a sufficiently high level, it is possible for a swimmer to swim upward in the holder via the open underside to a level protruding above the level of the surrouding water surface.

In another embodiment the water guide comprises a curved tube whereof the entrance is situated under a first water surface and the exit under a second water surface.

The means for transporting water upward in such a curved tube comprise for instance a pumping device connected to the highest part of the tube.

The dimensions of such a curved tube can be selected such that a part of the tube is elevated wholly above the surface of the water. A swimmer moving through the tube from the entrance to the exit will be swimming at a certain point at a height located above the water surface of the swimming pool. The curved tube can for instance be used as bridge over a division between two pools. It is not necessary for these pools to function as communicating vessels.

In an exceptional embodiment of a water guide with a curved tube the first water surface lies at a higher level than the second water surface.

When the entrance to a curved tube according to the invention lies below a first water surface having a higher level than the second water surface, beneath which the exit is located, the curved tube functions, once it is filled, as a syphon. A swimmer can then allow himself to be carried along by the flow in the tube generated by the syphon action from a pool at a determined water level to having a water surface at a lower level.

Special effects can be realized in a tube when swimming through a tube by using injecting means for injecting water into the tube.

By injecting water into a tube the flow in the tube can be accelerated, which certainly increases the recreative and attraction value of the system.

In one embodiment the injecting means according to the invention comprise at least one opening in the wall of the tube for feeding water into the tube.

The tube preferably comprises at least one band of openings distributed around the periphery of the tube wall.

In a tube into which water is injected via a number of openings distributed round the periphery of the tube wall a swimmer in the tube is as it were repelled from the wall of the tube, which can certainly offer advantages from a safety viewpoint when the water is flowing more rapidly in the tube.

The pushing up of the water in upward direction in the tube can also be effected using the means for injecting water into the tube. In a tube which connects two pools with different water levels injecting means can be employed to start the syphoning action of the tube and to subsequently increase the flow speed of the water.

In a tube provided with openings for injecting water and in which a flow is generated and maintained, the openings according to the invention preferably lie at an angle of slope relative to the tube wall such that supplied water is injected in the direction of the exit to the tube.

Depending inter alia on the position of the openings and the value of the angle of slope, a suction action will occur in such a tube as a consequence of a venturi effect by the injected water, as a result of which the water is supplied more easily to the entrance of the tube.

A preferred embodiment of a system with a curved tube which is used under conditions wherein water flows through the tube from the entrance to the exit is characterized by a pipe for return transport of water from the exit to the entrance of the tube.

This latter system preferably comprises a return pipe which connects the exit of the tube to the entrance thereof via a number of openings distributed in the tube wall around the exit and around the entrance, in which return pipe are received pumping means. A curved tube with a return pipe offers many advantages. A part of the water flowing through the tube is circulated due to the presence of the return pipe. The safety of the system is increased with a return pipe because flow and turbulence phenomena round the entrance to the tube are reduced. When the tube connects two water surfaces of the same level, pump circulation is to be preferred for reasons of energy since the water in the return pipe is supplied to the pumping device under a determined (hydrostatic) pressure. When the tube connects two pools at different levels a return pipe with pumping device contributes towards maintaining the level difference required for the syphoning action.

The safety of a system is increased according to the invention by a closable air inlet in the highest part of the system.

In normal conditions the air inlet is closed and in particular conditions the air inlet can be opened, as a result of which the hydrostatic pressure maintaining the water level in the water guide falls away. As a consequence the water level in the water guide will fall abruptly.

For reasons of safety operating means for the air inlet are preferably available in the interior of the system.

Yet another embodiment of a system according to the invention is characterized by control means for maintaining the pressure in an enclosed quantity of air in the highest part of the system above a predetermined value.

The minimum value of the air pressure in the highest part of the system will of course determine the maximum value of the height of the water carried up in the water guide. The dimensions of the water guide can be defined such that the vacuum required to maintain the water column in the water guide is still sufficiently high for a swimmer to remain for a longer period in the highest part of the system. The oxygen content of the enclosed quantity of air is then kept up to standard by blowing in fresh air, the pressure of which is kept constant using the control means.

Still another embodiment of a system according to the invention has the feature that the water guide comprises a tube rising from the water surface at a determined angle of slope and open at the bottom and top, the tube wall of which comprises at least one opening in peripheral direction on the underside for supplying water under pressure to the tube with pumping means, wherein the opening lies at an angle of slope relative to the tube wall such that supplied water is injected in the direction of the exit to the tube.

The water guide in this latter system offers the swimmer the option of being carried along by the water at the bottom of the tube and being ejected at the top above the water surface of the swimming pool in which the swimmer will again automatically land.

In preference this latter system comprises a return pipe from the top side of the tube to the pumping means. With such a return pipe the amount of energy required for the system is reduced, while the safety of the system is increased due to restraining of flow and turbulence phenomena in the water round the underside of the pipe.

In yet another embodiment the water guide comprises at least one vertical hollow pillar which pillar is provided on the underside with a swimmer entrance closable to water, the means for transporting water comprise a pumping device connected to the lowest portion of the pillar and the system comprises at the top receiving means for a person carries along by water in the pillar.

The receiving means comprise for example a closable swimmers' exit in the upper part of the pillar, which exit provides access to a pool.

When a person has entered the initially empty pillar and has closed the entrance, water is pushed upward into the pillar by the pumping device to a determined height, whereafter the pumping device is switched off and/or an excess of water is discharged via an overflow. The person is carried along by the rising water flow and is received at the top of the pillar, for instance in the pool accessible via the exit. When the exit is closed again the water is allowed to run out of the pillar, whereafter the entrance is re-opened and the cycle can be repeated with a following person.

In a particularly favourable embodiment the number of pillars amounts to at least two, which pillars each comprise on the underside a discharge pipe which is connected to the pumping device such that water pushed up into a particular pillar is drained via the discharge pipe and pushed up into the other pillar by the pumping device.

In this preferred embodiment energy and water are saved by making use each time in the filling of a pillar of the water and the static pressure thereof in the other pillar.

In the above described embodiments a person is taken up directly in the water in the pillar.

In an alternative embodiment the system comprises a platform movable in the pillar and floating on water.

In such a pillar a person assumes position on the platform and is then carried upward by the platform pushed up by the water.

When the buoyancy of the platform with a person in position thereon can be made adjustable it is possible to push a person upward on the platform enveloped by water to a greater or lesser extent.

A controllable buoyancy is brought about with a platform comprising a closable opening and a downward extending peripheral edge.

Closing the opening at an earlier or later stage in the initial phase of the filling of the pillar with water will result in a greater or smaller quantity of air in the space formed by the platform, the peripheral edge and the water surface and therefore a greater or smaller buoyancy of the platform with the person standing thereon. The attraction and recreational value of a platform with controllable buoyancy is increased further when the opening is formed such that it can be closed with the foot of a person standing thereon.

The attraction value is increased still more with a per se known water slide extending from the top of the pillar.

In order to heighten for instance visual and physical stimuli, to increase flow speeds or to replace water in the water guide or a quantity of air enclosed therein, the system comprises in a number of embodiments supply means for air to the water in the water guide.

Per se known materials for swimming pool systems for recreative purposes can be used as material for a system according to the invention. To increase the attraction and recreational value a system consists according to the invention at least partially of transparent material.

The invention will now be elucidated hereinafter in the light of embodiments not limiting the invention and with reference to the drawing.
Figure 1 shows a holder rising from the water surface which is closed at the top and open at the bottom;
figure 2 shows a tubular guide the entrance and exit of which are placed under two water surfaces of different level;
figure 3 shows a tubular guide with a return pipe;
figure 4 shows a tube open at the top and bottom which rises from the water surface at an inclined angle;
figure 5 shows a vertical hollow pillar with entrance and exit for a person and a pool at the top of the pillar; and
figure 6 shows a system comprising two vertical hollow pillars, a pool and a water slide.

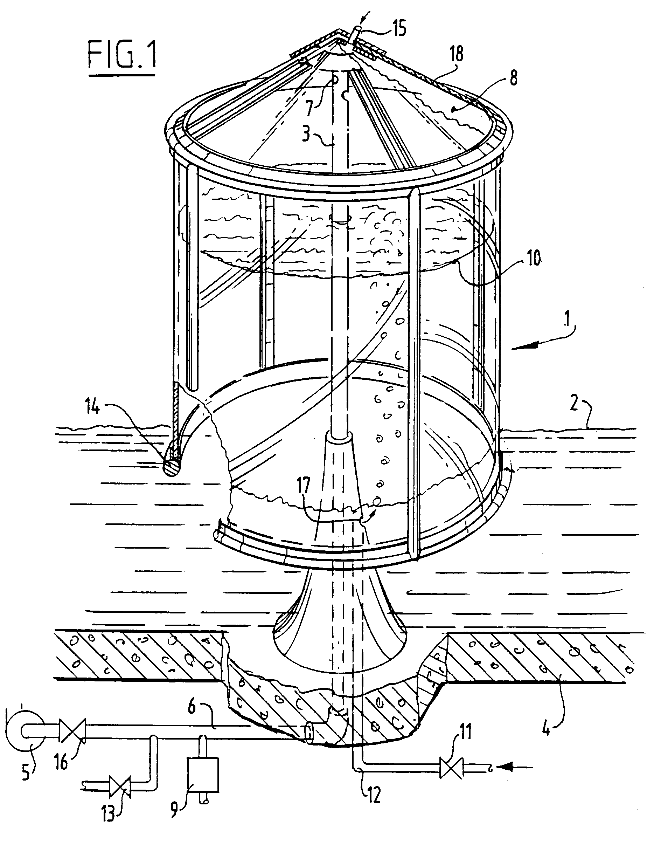

Figure 1 shows in cut-away perspective a holder 1 open at the top and bottom which rises from a water surface 2. The holder is supported by a column 3 which rests on the bottom 4 of a swimming pool. Using a vacuum pump 5 a vacuum is created in the upper part 8 of the interior of the holder 1 via a pump line 6, a closing valve 16 and openings 7. As a consequence of the pumping action water rises into the holder to a water level 10. By means of an air pipe 12 with closing valve 11 and an opening 17 debouching below the water surface 2 fresh air is added to the water in the holder and thereby to the upper part of the holder. To prevent additives such as for instance chlorine that may have been added to the swimming pool water being carried along by the air escaping from opening 17 and accumulating in the upper part 8 of holder 1, air can, by way of alternative or by way of addition, also be supplied via an opening 15 in the upper side 18 of the holder 1. The quantity of air supplied via the openings 15 and/or 17 is limited by a control system (not shown) in a manner compatible with the power and operation of vacuum pump 5. Air can be admitted very rapidly into holder 1 as the situation requires by opening closing valve 13 and simultaneously closing closing valve 16, as a result of which the water level 10 will fall to the level of the water surface 2. By closing and opening the closing valves 13 and 16 respectively the water in the holder will rise again. A swimmer can swim under the edge 14 up into the holder 2. The wall and the upper part of the holder are preferably manufactured from transparent material, which considerably increases the attraction value of the system both for swimmers and spectators. In order to increase convenience and safety the column 3 can further be provided in known manner with an edge at the bottom on which a swimmer can stand, an edge at the top on which a swimmer can grip fast and with an ergonomically formed handle with which, in the manner of a "communication cord" the closing valve 13 can be opened.

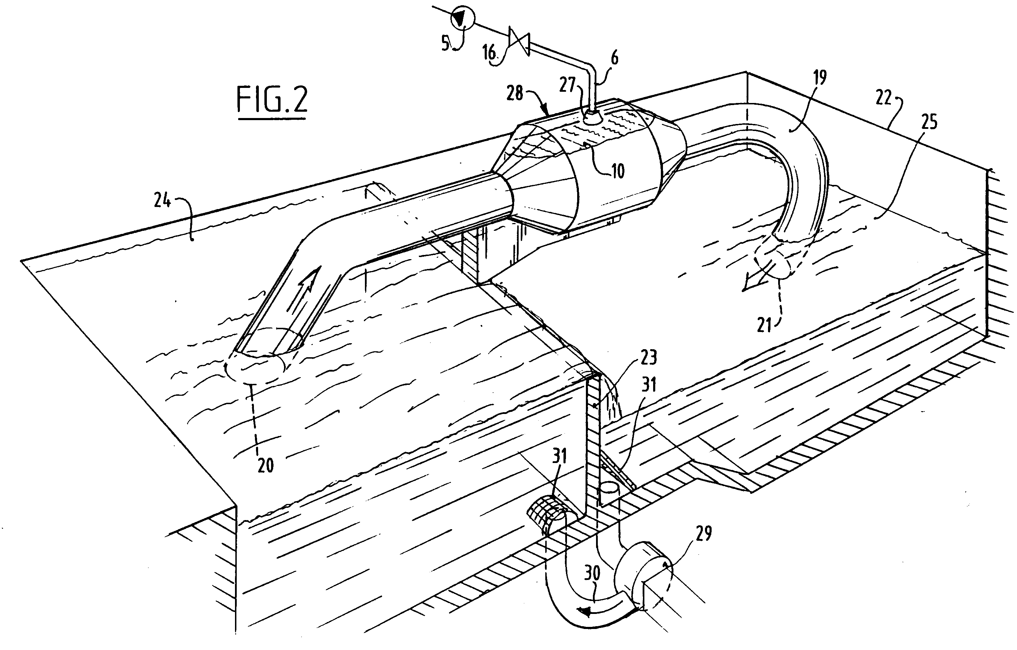

Figure 2 shows in cut-away perspective view a curved tube according to the invention with entrance 20 and exit 21 in a swimming pool 22 which is divided by a partition wall 23 into a pool with a first 24 water surface and a lower lying second 25 water surface. Via a connection 27, a pump line 6 and a closing valve 16 air is extracted using a vacuum pump 5 from a chamber 28 which is formed by a widened portion of the tube 19. Under the influence of the pumping action water rises via the entrance 20 into the tube 19 until the moment that the tube 19 begins to act as a syphon and the flow in the tube is maintained as a result of the level difference between the water surfaces 24 and 25. The height of the water level 10 in the chamber 28 is dependent on the air pressure above the water surface 10. As discussed above with reference to figure 1, the air in chamber 28 above water surface 10 can be replaced regularly at a constantly maintained pressure using supply and control systems so that swimmers moving via tube 19 from the higher to the lower part of the swimming pool 22 can take a break in chamber 28 and, if the chamber is made of transparent material, enjoy the view. Using a return pipe 30 provided with a water pump 29 and protected by gratings 31 the level difference between both parts of the swimming pool can be maintained.

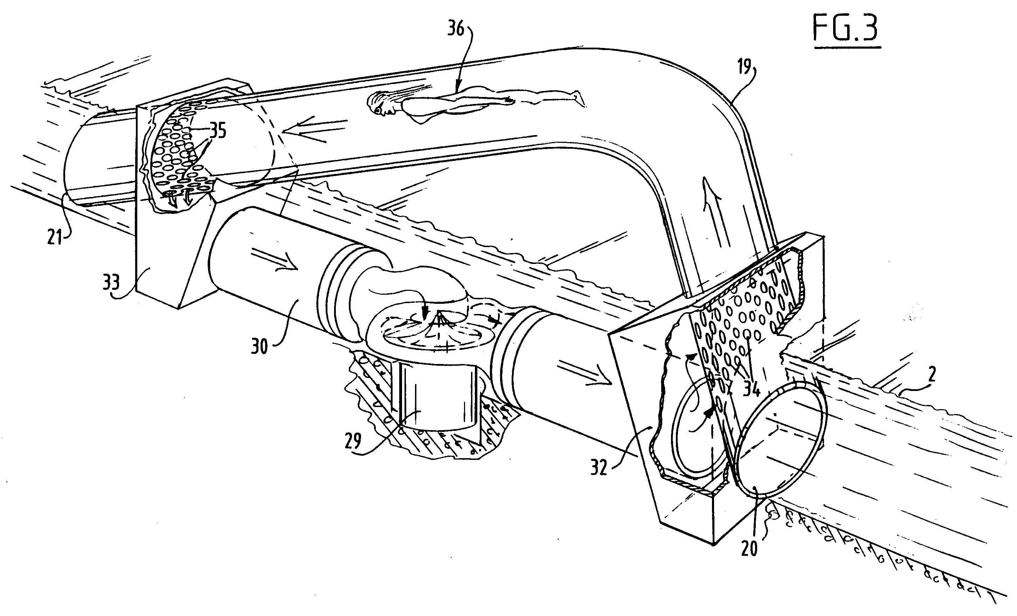

Figure 3 shows a curved tube 19 of which the entrance 20 and the exit 21 lie below the same water surface 2. The tube is provided with a return pipe 30 in which a water pump 29 is received. The return pipe 30 is connected to connecting pieces 34 and 35 which form a chamber around the tube wall close to the entrance 20 and exit 21 respectively of the tube 19. Injecting into and extraction from the tube 19 of water takes place via openings 34 and 35 respectively in the portions of the tube wall enclosed by the respective connecting pieces 32 and 33. The openings 34 arranged in a band around tube 19 lie at a sloping angle relative to the tube wall such that supplied water is injected in the direction of the exit 21 of the tube. Thus achieved is that the water injected via the openings 34 leaves the tube 19 not via the entrance 20 but via the exit 21 or via the openings 35. Water jets injected via thus formed openings 34 moreover exert as a result of a venturi effect a suction action on water from the swimming pool supplied via the opening 20. Because a great part of the water flow through tube 19 is carried through the return pipe 30 via the openings 34 using the pump 29, the flow at the location of opening 20 is comparatively small and there is little turbulence there, so that a swimmer 36 swims into the entrance in relatively calm conditions and is only subjected to a considerable acceleration of the water flow through the tube 19 at the position of the openings 34.

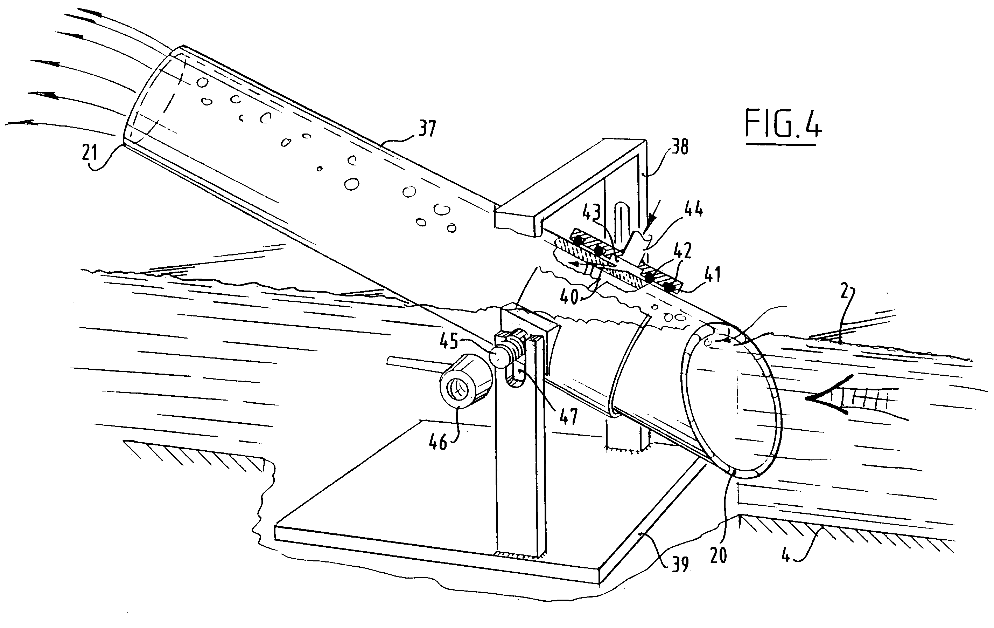

Figure 4 shows schematically an open tube 37 rising at an incline from a water surface 2, the entrance 20 to which is situated below the water surface 2 and the exit 21 thereabove. The tube is suspended in a yoke 38 fixed on a foot 39 resting on the bottom 4 of the swimming pool. The tube 37 is interrupted in peripheral direction by a slot 40 running according to a cone surface, on either side of which the tube is held together via seals 42 by a collar 41 in peripheral direction. The collar 41 comprises a recess 43 in peripheral direction on either side of the slot 40 into which recess debouches an inlet 44. Water is injected into the tube 37 in the direction of the exit 21 via the inlet 44, the annular recess 43 and the annular slot 40. Due to the venturi effect occurring at the point of the outlet of the slot 40 in tube 37 water is drawn in from the swimming pool via the entrance 20, as a result of which a water flow leaves the exit 21 that has a sufficient output to push a swimmer via the entrance 20 up the tube 37 and to eject him via the exit 21 at an appropriate speed. The angle of the tube 37 to the water surface and the height of tube 37 can be varied as can be seen from the schematically shown suspension of the tube 37 by means of a screw shaft 45 displaceable in a vertical slot 47 and connected to the collar 41, which shaft is fixed in place by a nut 46.

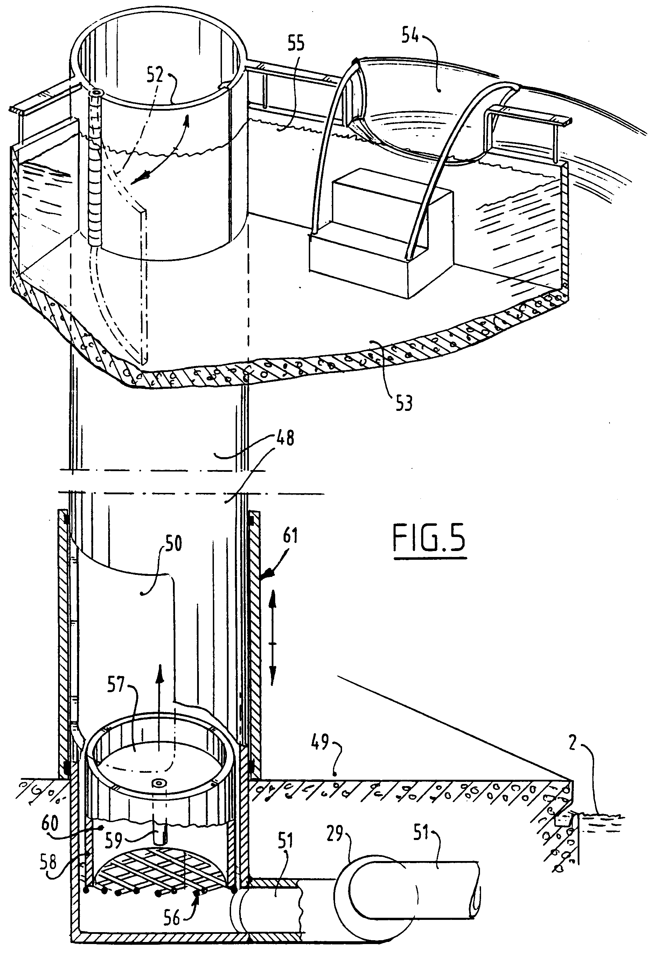

Figure 5 shows a hollow tube 48 disposed vertically on a bottom 49 and having a swimmer entrance 50 on the underside thereof. Using a water pump 29 water is supplied via a feed pipe 51 to the tube 48 when a person (not shown) has taken up position therein and the entrance 50 is closed. The tube 48 is provided at the top with a closable swimmer exit 52 which provides access to a pool 53. The elevated pool 53 forms the starting point of a water slide 54 which runs out for instance above the water surface 2 of a second pool adjoining the foot of the tube 48. The closable swimmer entrance 52 is for instance designed such that it can only be opened when the water level in tube 48 equals the level 55 of the water in pool 53. According to the invention a person can be pushed upward directly by the water in tube 48 without other assist means. The drawing shows another alternative option wherein a person takes up position on a platform 57 which rests on a grating 56 and which is provided with a peripheral edge 58 and a channel 59 closable with the foot. When water is carried into tube 48 by pump 29 via feed pipe 51 this water slowly fills the space enclosed by the platform 57 and the downward extending peripheral edge 58 thereof. Closing of the channel 59 in good time creates an air chamber 60 on the underside of platform 57, the volume of which is determined by the moment of closing of the channel 59. By thus controlling the volume of the air chamber 60 the buoyancy of the combination of the platform and a person who has taken up position thereon is also controlled. The person is thus pushed upward enveloped in a greater or smaller amount of water determined by himself. The drawing finally shows a sleeve 61 concentric to the tube 48 and displaceable vertically therealong with which the entrance 50 can be closed.

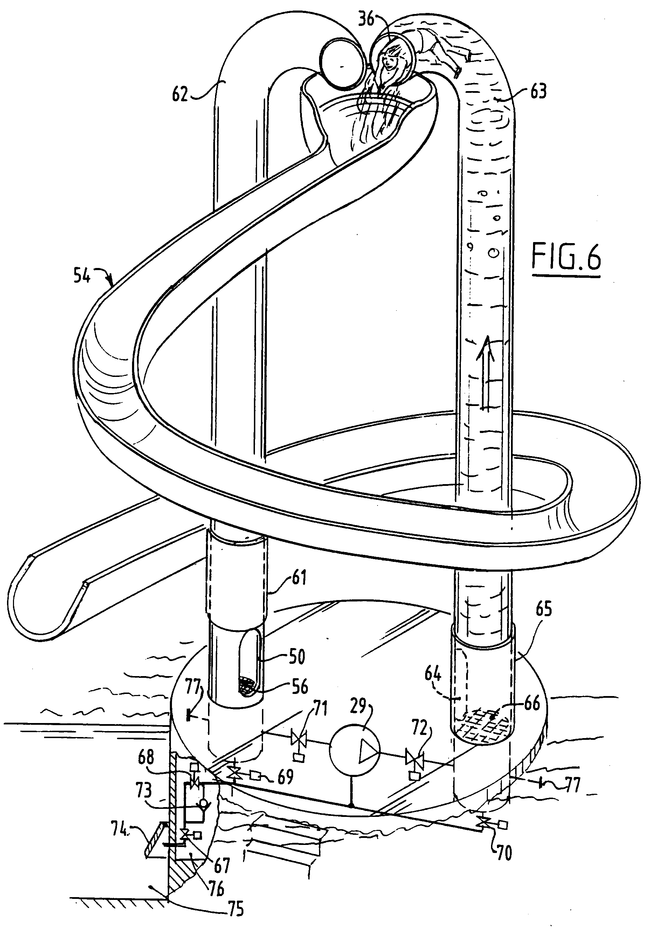

Figure 6 shows a system according to the invention with two hollow tubes 62, 63 wherein a person can be pushed upward by water. The rise tubes 62, 63 are disposed vertically on a bottom 49 adjacent to a pool 75. Located under the rise tubes is a cellar 76 in which is arranged a water pump 29. Rise tubes 62 and 63 debouch at the top above the high position of the starting point of a known zigzag water slide 54. Situated in the rise tubes 62 and 63 are gratings 56 and 66 on which a person for transporting in the tube can take up position via the respective entrances 50 and 64. The entrances 50 and 64 can be closed by vertically displaceable sleeves 61 and 65 respectively. Water can be fed to the rise tubes 62, 63 via a pipe system in which are incorporated a water pump 29 and the valves 67, 68, 69, 70, 71 and 72 for remote opening and closing, in addition to a non-return valve 73 closing in the direction of the apex point. A compressed air line can be connected onto the connecting points 77. The operation of the system can be described as follows: Water is drawn from the pool 75 from behind grating 74 with pump 29 via non-return valve 73 and the valve 67, which is open under normal conditions, and pressed via valve 72 into the rise tube 63. If a person has assumed position on grating 66 he is carried along upward by the water flow and dropped into slide 54 which debouches above the pool 75. A following person can meanwhile have taken up position on grating 56 in tube 62, with the entrance 50 then being closed by sleeve 61. Valve 72 is then closed, valve 70 and 71 are successively opened and the second person also pushed upward. The tube 63 is then available again. In this manner use is made of both the static pressure in an emptying tube and the action of pump 29. When circumstances require the rise tubes 62 and 63 can be quickly emptied into pool 75 via the valves 69 and 70 and the closing valves 68 and 67.

## Claims

1. Swimming pool system for recreative purposes comprising
a water guide comprising substantially closed lateral walls, extending at least partially above the level of the water surface of this swimming pool and in which a person can move,
**characterized by**
means for transporting water in the water guide in upward direction in such amounts, that the person is allowed to be moved in upward direction.

2. System as claimed in claim 1, **characterized in that** the water guide comprises a holder rising from the surface of the water and closed at the top and open at the bottom, and the means for transporting water comprise a pumping device connected to the top side of the holder.

3. System as claimed in claim 1, **characterized in that** the water guide comprises a curved tube whereof the entrance is situated under a first water surface and the exit under a second water surface.

4. System as claimed in claim 3, **characterized in that** the means for transporting water comprise a pumping device connected to the highest part of the tube.

5. System as claimed in claim 3 or 4, **characterized in that** the first water surface lies at a higher level than the second water surface.

6. System as claimed in any of the claims 3-5, **characterized by** injecting means for injecting water into the tube.

7. System as claimed in claim 6, **characterized in that** the injecting means comprise at least one opening in the wall of the tube for feeding water into the tube.

8. System as claimed in claim 7, **characterized by** a number of openings distributed round the periphery of the tube wall.

9. System as claimed in claim 7 or 8, **characterized in that** the openings lie at an angle of slope relative to the tube wall such that supplied water is injected in the direction of the exit to the tube.

10. System as claimed in any of the claims 6-9, **characterized by** a pipe for return transport of water from the exit to the entrance of the tube.

11. System as claimed in claim 10, **characterized by** a return pipe which connects the exit of the tube to the entrance thereof via numbers of openings distributed in the tube wall around the exit and around the entrance, and by pumping means in the return pipe.

12. System as claimed in any of the claims 1-11, **characterized by** a closable air inlet in the highest part of the system.

13. System as claimed in claim 12, **characterized by** operating means for the air inlet present in the interior of the system.

14. System as claimed in claim 2 or 3, **characterized by** control means for maintaining the pressure in an enclosed quantity of air in the highest part of the system above a predetermined value.

15. System as claimed in claim 1, **characterized in that** the water guide comprises a tube rising from the water surface at a determined angle of slope and open at the bottom and top, the tube wall of which comprises at least one opening in peripheral direction on the underside for supplying water under pressure to the tube with pumping means, wherein the opening lies at an angle of slope relative to the tube wall such that supplied water is injected in the direction of the exit to the tube.

16. System as claimed in claim 15, **characterized by** a return pipe from the top side of the tube to the pumping means.

17. System as claimed in claim 1, **characterized in that** the water guide comprises at least one vertical hollow pillar which pillar is provided on the underside with a swimmer entrance closable to water,
the means for transporting water comprise a pumping device connected to the lowest portion of the pillar
and the system comprises at the top receiving means for a person carried along by water in the pillar.

18. System as claimed in claim 17, **characterized by** a closable swimmer exit in the upper part of the pillar, which exit provides access to a pool.

19. System as claimed in claim 17 or 18, **characterized in that** the number of pillars amounts to at least two, which pillars each comprise on the underside a discharge pipe which is connected to the pumping device such that water pushed up into a particular pillar is drained via the discharge pipe and pushed up into the other pillar by the pumping device.

20. System as claimed in any of the claims 17-19, **characterized by** a platform movable in the pillar and floating on water.

21. System as claimed in claim 20, **characterized in that** the platform comprises a closable opening and a downward extending peripheral edge.

22. System as claimed in any of the claims 17-21, **characterized by** a water slide extending from the upper part of the pillar.

23. System as claimed in any of the claims 1-22, **characterized by** supply means for air to water in the water guide.

24. System as claimed in any of the claims 1-23, **characterized in that** the system consists at least partially of transparent material.

## Patentansprüche

1. Schwimmbeckensystem für Erholungszwecke mit
einer Wasserführung, die im wesentlichen geschlossene seitliche Wände aufweist, sich zumindest teilweise über dem Niveau der Wasserfläche dieses Schwimmbeckens erstreckt und in der sich eine Person bewegen kann,
**gekennzeichnet durch**
eine Einrichtung zum Transportieren von Wasser in der Wasserführung in Aufwärtsrichtung in derartigen Mengen, daß eine Bewegung der Person in Aufwärtsrichtung ermöglicht ist.

2. System nach Anspruch 1, **dadurch gekennzeichnet, daß** die Wasserführung eine Halterung aufweist, die sich von der Oberfläche des Wassers erhebt, an der Oberseite geschlossen ist und an der Unterseite geöffnet ist, und daß die Einrichtung zum Transportieren von Wasser eine Pumpvorrichtung aufweist, die mit der Oberseite der Halterung verbunden ist.

3. System nach Anspruch 1, **dadurch gekennzeichnet, daß** die Wasserführung ein gekrümmtes Rohr aufweist, dessen Eintritt unter einer ersten Wasseroberfläche und dessen Austritt unter einer zweiten Wasseroberfläche angeordnet ist.

4. System nach Anspruch 3, **dadurch gekennzeichnet, daß** die Einrichtung zum Transportieren von Wasser eine Pumpvorrichtung aufweist, die mit dem höchsten Teil des Rohrs verbunden ist.

5. System nach Anspruch 3 oder 4, **dadurch gekennzeichnet, daß** die erste Wasseroberfläche auf einem höheren Niveau als die zweite Wasseroberfläche liegt.

6. System nach einem der Ansprüche 3-5, **gekennzeichnet durch** eine Einspritzeinrichtung zum Einspritzen von Wasser in das Rohr.

7. System nach Anspruch 6, **dadurch gekennzeichnet, daß** die Einspritzeinrichtung zumindest eine Öffnung in der Wand des Rohrs aufweist, um Wasser in das Rohr zu fördern.

8. System nach Anspruch 7, **gekennzeichnet durch** eine Anzahl von Öffnungen, die um den Umfang der Rohrwand verteilt sind.

9. System nach Anspruch 7 oder 8, **dadurch gekennzeichnet, daß** die Öffnungen unter einem zur Rohrwand geneigten Winkel liegen, so daß das zugeführte Wasser in der Richtung des Austritts in das Rohr eingespritzt wird.

10. System nach einem der Ansprüche 6-9, **gekennzeichnet durch** eine Rohrleitung zum Rücktransport von Wasser von dem Austritt zum Eintritt des Rohrs.

11. System nach Anspruch 10, **gekennzeichnet durch** eine Rückführrohrleitung, die den Austritt des Rohrs mit ihrem Eintritt über eine Anzahl von Öffnungen verbindet, die in der Rohrwand um den Austritt und um den Eintritt verteilt sind, und durch eine Pumpeinrichtung in der Rückführrohrleitung.

12. System nach einem der Ansprüche 1-11, **gekennzeichnet durch** einen schließbaren Lufteinlaß im höchsten Teil des Systems.

13. System nach Anspruch 12, **gekennzeichnet durch** eine Betätigungseinrichtung für den Lufteinlaß, die im Inneren des Systems vorhanden ist.

14. System nach Anspruch 2 oder 3, **gekennzeichnet durch** eine Regeleinrichtung zum Halten des Drucks in einer umschlossenen Menge von Luft in dem höchsten Teil des Systems über einem vorbestimmten Wert.

15. System nach Anspruch 1, **dadurch gekennzeichnet, daß** die Wasserführung ein Rohr aufweist, das sich von der Wasseroberfläche unter einem vorbestimmten Neigungswinkel erhebt und an der Unterseite und an der Oberseite geöffnet ist, wobei dessen Rohrwand zumindest eine Öffnung in Umfangsrichtung an der Unterseite aufweist, um druckbeaufschlagtes Wasser in das Rohr mittels einer Pumpeinrichtung zuzuführen, wobei die Öffnung zur Rohrwand unter einem Neigungswinkel liegt, so daß das zugeführte Wasser in der Richtung des Austritts in das Rohr eingespritzt wird.

16. System nach Anspruch 15, **gekennzeichnet durch** eine Rückführrohrleitung von der Oberseite des Rohrs zu der Pumpeinrichtung.

17. System nach Anspruch 1, **dadurch gekennzeichnet, daß** die Wasserführung zumindest eine senkrechte hohle Säule aufweist, die an der Unterseite mit einem Eintritt für einen Schwimmer versehen ist, der gegenüber Wasser verschließbar ist,
daß die Einrichtung zum Transportieren von Wasser eine Pumpvorrichtung aufweist, die mit dem untersten Abschnitt der Säule verbunden ist, und
daß das System an der Oberseite eine Aufnahmeeinrichtung aufweist, um eine durch Wasser längs in der Säule transportierte Person aufzunehmen.

18. System nach Anspruch 17, **gekennzeichnet durch** einen verschließbaren Austritt für Schwimmer in dem oberen Teil der Säule, wobei der Austritt einen Zugang zu einem Becken schafft.

19. System nach Anspruch 17 oder 18, **dadurch gekennzeichnet, daß** die Anzahl der Säulen zumindest zwei beträgt, wobei jede Säule an der Unterseite eine Auslaßrohrleitung aufweist, die mit der Pumpvorrichtung verbunden ist, so daß das Wasser, das in eine Säule nach oben gedrückt ist, über die Auslaßrohrleitung abgezogen wird und durch die Pumpvorrichtung in die andere Säule nach oben gedrückt wird.

20. System nach einem der Ansprüche 17-19, **gekennzeichnet durch** eine in der Säule bewegbare und auf Wasser schwimmende Plattform.

21. System nach Anspruch 20, **dadurch gekennzeichnet, daß** die Plattform eine verschließbare Öffnung und eine sich nach unten erstreckende Umfangskante aufweist.

22. System nach einem der Ansprüche 17-21, **gekennzeichnet durch** eine Wasserrutschbahn, die sich von dem oberen Teil der Säule erstreckt.

23. System nach einem der Ansprüche 1-22, **gekennzeichnet durch** eine Zuführeinrichtung zur Zufuhr von Luft in das Wasser in der Wasserführung.

24. System nach einem der Ansprüche 1-23, **dadurch gekennzeichnet, daß** das System zumindest teilweise aus durchsichtigem Material besteht.

## Revendications

1. Dispositif récréactif pour piscine comprenant un conduit d'eau comportant des parois latérales sensiblement fermées, s'étendant au moins partiellement au dessus du niveau de la surface de l'eau de la piscine et dans lequel une personne peut se déplacer, caractérisé par des moyens pour déplacer l'eau dans le conduit d'eau vers le haut en quantité telle que la personne puisse être soulevée.

2. Dispositif suivant la revendication 1, caractérisé en ce que le conduit d'eau comporte un support émergeant au dessus de la surface de l'eau et fermé à son extrémité supérieure et ouvert à son extrémité inférieure et les moyens pour déplacer l'eau comprennent un dispositif de pompage relié à l'extrémité supérieure du support.

3. Dispositif suivant la revendication 1, caractérisé en ce que le conduit d'eau comprend un tube incurvé dont l'entrée est située sous un premier niveau de surface de l'eau et et la sortie sous un second niveau de surface de l'eau.

4. Dispositif suivant la revendication 3, caractérisé en ce que les moyens pour déplacer l'eau comprennent un dispositif de pompage relié à la partie la plus haute du tube.

5. Dispositif suivant la revendication 3 ou 4, caractérisé en ce que le premier niveau de surface de l'eau est plus haut que le second niveau de surface.

6. Dispositif suivant l'une quelconque des revendications 3 à 5, caractérisé par des moyens pour injecter de l'eau dans le tube.

7. Dispositif suivant la revendication 6, caractérisé en ce que les moyens d'injection comprennent au moins une ouverture dans la paroi du tube pour alimenter en eau ce dernier.

8. Dispositif suivant la revendication 7, caractérisé par un nombre d'ouvertures réparties sur la périphérie de la paroi du tube.

9. Dispositif suivant la revendication 7 ou 8, caractérisé en ce que les ouvertures sont situées suivant un angle d'inclinaison par rapport à la paroi du tube tel que l'eau d'alimentation est injectée en direction de la sortie du tube.

10. Dispositif suivant l'une quelconque des revendications 6 à 9, caractérisé par une canalisation de retour d'eau de la sortie vers l'entrée du tube.

11. Dispositif suivant la revendication 10, caractérisé par une canalisation de retour qui relie la sortie du tube à son entrée par l'intermédiaire de multiples ouvertures réparties dans la paroi du tube autour de la sortie et autour de l'entrée et par des moyens de pompage agencés dans la canalisation de retour.

12. Dispositif suivant l'une quelconque des revendications 1 à 11, caractérisé par une entrée d'air obturable dans la partie la plus haute du dispositif.

13. Dispositif suivant la revendication 12, caractérisé par des moyens d'actionnement pour l'entrée d'air présent à l'intérieur du dispositif.

14. Dispositif suivant la revendication 2 ou 3, caractérisé par des moyens de commande du maintien de la pression dans une quantité délimitée d'air dans la partie supérieure du dispositif au dessus d'une valeur prédéterminée.

15. Dispositif suivant la revendication 1, caractérisé en ce que le conduit d'eau comporte un tube émergeant au dessus de la surface de l'eau avec un angle d'inclinaison déterminé et ouvert à ses extrémité inférieure et supérieure, la paroi du tube comporte au moins une ouverture périphérique du côté inférieur pour fournir en eau sous pression le tube à l'aide de moyens de pompage, dans lequel l'ouverture présente un angle d'inclinaison par rapport au tube tel que l'eau d'alimentation est injectée en direction de la sortie du tube.

16. Dispositif suivant la revendication 15, caractérisé par une canalisation de retour de l'extrémité supérieure du tube vers les moyens de pompage.

17. Dispositif suivant la revendication 1, caractérisé en ce que le conduit d'eau comporte au moins une colonne creuse verticale, laquelle colonne est prévue du côté inférieur avec une entrée pour nageurs pouvant être isolée de l'eau, les moyens pour déplacer l'eau comprennent un dispositif de pompage relié à la partie la plus basse de la colonne et le dispositif comprend à sa partie supérieure des moyens pour recevoir une personne transportée par l'eau dans la colonne.

18. Dispositif suivant la revendication 17, caractérisé par une sortie pour nageurs obturable dans la partie haute de la colonne, laquelle sortie constitue un accès à une piscine.

19. Dispositif suivant la revendication 17 ou 18, caractérisé en ce que le nombre de colonnes est d'au moins deux, chaque colonne comportant du côté inférieur une canalisation de décharge reliée au dispositif de pompage de façon que l'eau propulsée dans une colonne particulière soit amenée par la canalisation de décharge et propulsée dans l'autre colonne par le dispositif de pompage.

20. Dispositif suivant l'une quelconque des revendications 17 à 19, caractérisé par une plate-forme mobile dans la colonne et flottant sur l'eau.

21. Dispositif suivant la revendication 20, caractérisé en ce que la plate-forme comporte un orifice obturable et un rebord périphérique s'étendant vers le bas.

22. Dispositif suivant l'une quelconque des revendications 17 à 21, caractérisé par un toboggan partant de la partie supérieure de la colonne.

23. Dispositif suivant l'une quelconque des revendications 1 à 22, caractérisé par des moyens pour envoyer de l'air dans l'eau dans le conduit d'eau.

24. Dispositif suivant l'une quelconque des revendications 1 à 23, caractérisé en ce qu'il est réalisé au moins partiellement en matériau transparent.
